# EUROPEAN PATENT APPLICATION

(11) **EP 1 587 204 A2**
(43) Date of publication of application: **19.10.2005**
(21) Application number: 05007950.8
(22) Date of filing: 12.04.2005
(51) Int. Cl.: H02K 5/15

(54) **Electric motor**

(30) Priority: 16.04.2004 JP 2004122098
(71) Applicant: FANUC LTD, Minamitsuru-gun, Yamanashi 401-0597 (JP)
(72) Inventor: Okamoto, Takashi, c/o Room 11-605, Minamitsuru-gun Yamanashi 401-0511 (JP); Furuya, Tsuyoshi, Front garden hill H201, Minamitsuru-gun Yamanashi 401-0301 (JP)
(74) Representative: Schmidt, Steffen J.

(57) **Abstract**

An electric motor 1 includes a rotor 4 having a rotary shaft 9, a stator 5 annularly surrounding the outer periphery of the rotor 4 in spaced relation therewith, a housing 3 for protecting at least the axial end surfaces of the stator 5, bearings 2 for rotatably supporting the rotary shaft 9, and a bearing mounting member 7 arranged around the rotary shaft for fixing the bearings 2 on the housing 3. The electric motor 1 further includes an adjusting member 11 interposed between the bearing mounting member 7 and the housing 3 for adjusting the diametrical inclination of the axial width of the space between the bearing mounting member 7 and the housing 3.

## Description

### BACKGROUND OF THE INVENTION

### 1. Field of the Invention

The present invention relates to an electric motor and, more particularly, to an electric motor having a mechanism for correcting a misalignment of a center axis of a shaft thereof.

### 2. Description of the Related Art

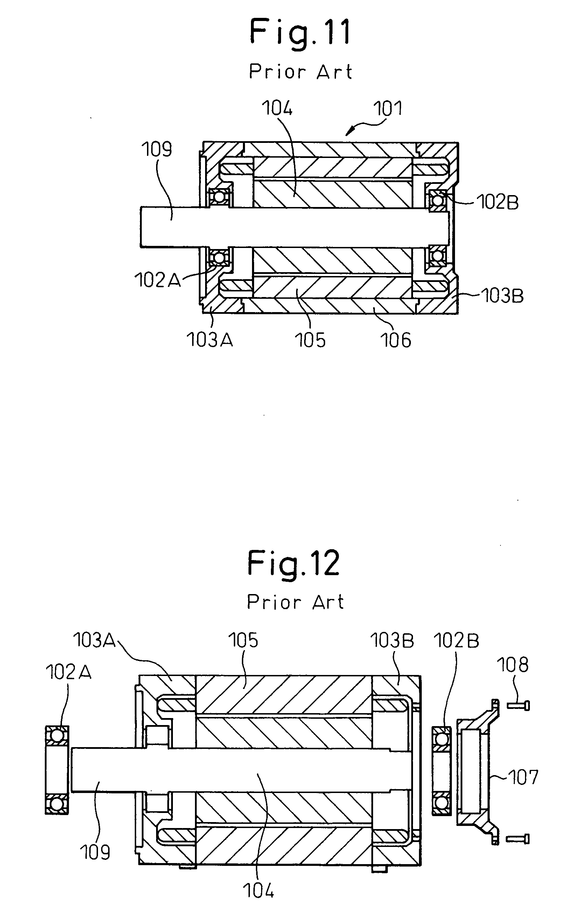

Fig. 11 is a schematic diagram showing a typical electric motor. The electric motor 101 shown in Fig. 11 includes a rotor 104 having a rotary shaft 109, a stator 105 surrounding the outer periphery of the rotor 104 in spaced relation therewith, a front housing 103A and a rear housing 103B protecting at least axial end surfaces of the stator 105, and a front bearing 102A and a rear bearing 102B rotatably supporting the rotary shaft 109. The front bearing 102A and the rear bearing 102B are fixed by the front housing 103A and the rear housing 103B, respectively, which in turn are coupled to a cylindrical jacket 106. The rotary shaft 109 of the rotor 104 is rotatably supported on the front housing 103A and the rear housing 103B through the front bearing 102A and the rear bearing 102B at the front and rear portions of the rotary shaft 109.

The center axes of the bearings are required to be exactly arranged in line with the rotation axis of the rotor and the rotary shaft. In a typical electric motor, accurately fabricated parts are assembled together to align the center axes of the bearings with the rotation axis of the rotor and the rotary shaft.

In Fig. 11, the component parts including the front housing 103A and the rear housing 103B and the jacket 106 connecting these housings 103A and 103B are fabricated accurately and assembled together, so that the center axes of the bearings 102A, 102B are not arranged in an inclined relation with regard to the rotation axis of the rotor 104 and the rotary shaft 109.

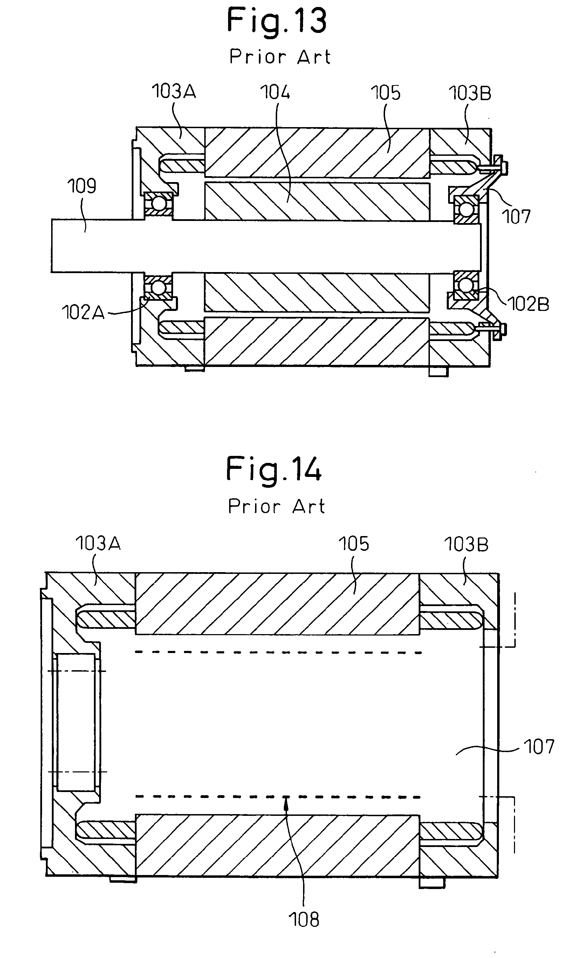

Also, a type of electric motor is known which has a configuration not using the jacket described above in order to reduce the number of the parts thereof. Figs. 12 and 13 show an example of the configuration of the electric motor using no jacket. In the electric motor 101 shown in Figs. 12 and 13, the front housing 103A and the rear housing 103B are fixedly mounted to the front and the back of the stator 105, the front bearing 102A is mounted on the front housing 103A, and the rear bearing 102B is mounted on the rear housing 103B through a bearing mounting member (bearing holder) 107.

In this configuration, the housings 103A, 103B on which the front bearing 102A and the rear bearing 102B are mounted and the bearing mounting member (bearing holder) 107 are machined in one process, so that the center axes of the front bearing 102A and the rear bearing 102B are aligned with each other thereby to align the center axes of the rotor 104 and the rotary shaft 109 with the center axes of the bearings 102A, 102B. This machining operation is called "an integral machining process".

Fig. 14 is a diagram illustrating the integral machining process. In the integral machining process, the fitting portion between the front bearing 102A and the front housing 103A located on the front side of the electric motor and the fitting portion between the bearing mounting member (bearing holder) 107 and the rear housing 103B located on the rear side of the electric motor are machined with the axial position 108 (shown dashed lines in Fig. 14) of the electric motor body as a reference. In this way, the center axis of the front bearing 102A can be aligned with the center axis of the rear bearing 102B.

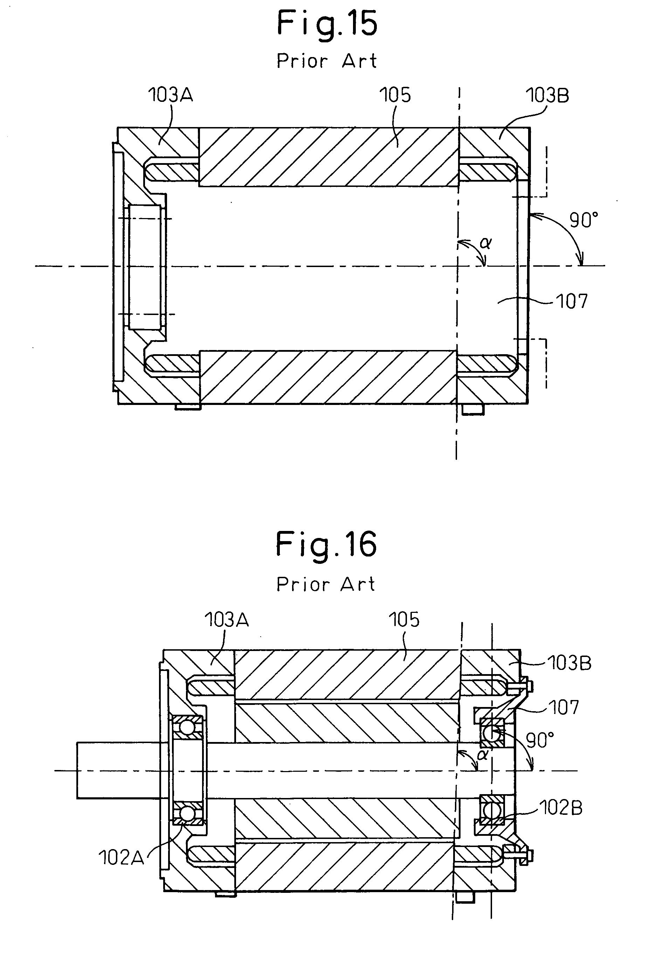

Figs. 15 and 16 show an electric motor in which an axial end surface of the stator is inclined. Fig. 15 shows a state in which the housing is integrally machined. In the case where an axial end surface of the stator 105 of the electric motor is inclined (the angle α in Fig. 15 is not 90°), the rear housing 103B mounted on the stator 105 is also inclined due to the inclination of the end surface of the stator 105. However, even in the case where the rear housing 103B is mounted on the stator 105 in an inclined state, the center axis of the fitting portion of the front housing 103A and the center axis of the fitting portion of the rear housing 103B can be aligned each other by integrally machining the rear housing 103B and the stator 105 on which the rear housing 103B is mounted while being inclined.

Fig. 16 shows the state in which the rotor and the rotary shaft are inserted after the integral machining process. As the result of the integral machining process, the fitting portion of the front housing 103A (specifically, the inner peripheral surface of the opening for mounting the bearing thereon) and the fitting portion of the rear housing 103B (specifically, the inner peripheral surface of the opening for fitting the outer peripheral surface of the bearing mounting member) are formed to have a common axis. Therefore, in spite of the inclination of the rear housing 103B, the center axis of the front bearing 102A mounted on the front housing 103A can be aligned with the center axis of the rear bearing 102B mounted on the rear housing 103B.

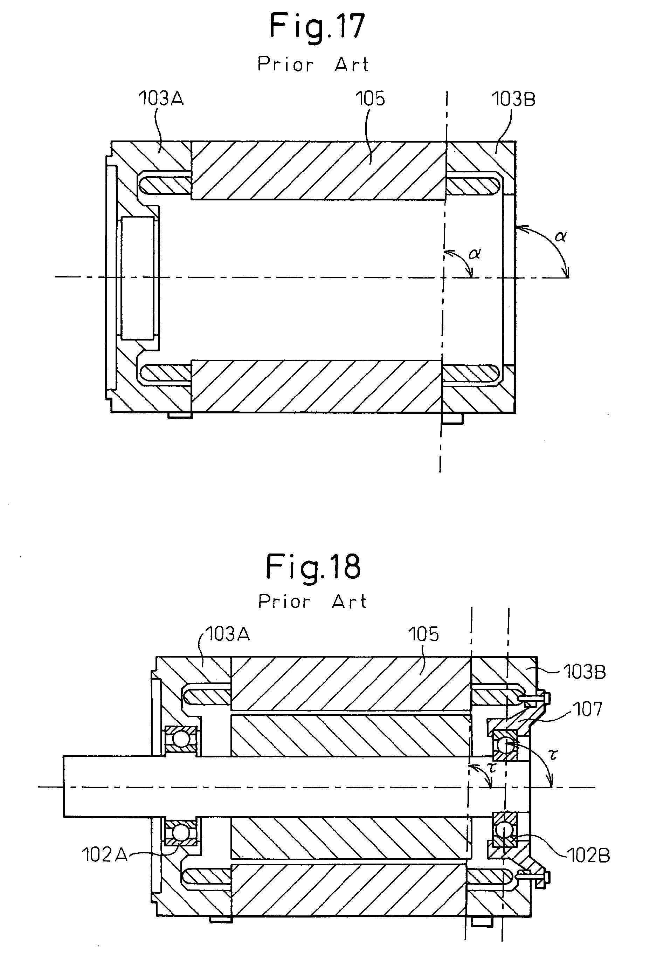

On the other hand, Figs. 17 and 18 show an electric motor to which the integral machining process is not applied. Fig. 17 shows the state in which the rear housing 103B is mounted on the stator 105 after machining a portion of the rear housing 103B fitted with the rear bearing 102B (an inner peripheral surface of the opening of the rear housing 103B to which the rear bearing 102B is fixed). Thus, if the end surface of the stator 105 facing in the direction of the center axis is inclined (the angle α is not 90° in Fig. 17), the rear housing 103B is mounted to the stator 105 while the end surface thereof facing in the direction of the center axis is inclined by the angle α with respect to the rotation axis of the stator 105 (the center axis of the inner peripheral surface of the opening of the rear housing 103B is inclined by "90° - α" with respect to the rotation axis of the stator 105).

Fig. 18 shows the state in which the rotor and the rotary shaft are inserted into the rear housing mounted on the stator 105 in inclined state. In the case where the rear bearing 102B is mounted on the rear housing 103B mounted on the stator 105 in inclined state, the inclination of the inner peripheral surface of the opening of the rear housing 103B inclines the rear bearing 102B mounted on the inner peripheral surface of the of the opening of the rear housing 103B (the angle τ in Fig. 18 is not 90°). Therefore, in the case where the integral machining process is not conducted, the inclination of the rear housing 103B affects the mounting operation of the rear bearing 102B, thereby affecting the alignment of the center axes between the front bearing 102A and the rear bearing 102B.

As described above, in the motor constructed without a jacket, the center axis of the front bearing and the center axis of the rear bearing of the electric motor can be aligned with each other by integral machining process. However, in the case where the integral machining process is applied to a large-sized electric motor, a problem is encountered that, in a machining apparatus for an integral machining, the large-sized electric motor is difficult to handle from the viewpoint of physical size.

### SUMMARY OF THE INVENTION

Accordingly, it is an object of the present invention to provide an electric motor constructed without a jacket, in which the rotation axis of the rotor can be easily aligned with the center axes of the bearings without using an integral machining process.

The present invention can correct the inclination of the bearing to thereby align the rotation axis of the rotary shaft of the rotor with the center axes of the bearings, without resorting to the integral machining process.

According to the present invention, there is provided an electric motor which includes a rotor having a rotary shaft, a stator annularly surrounding the outer peripheral surface of the rotor in a spaced relation therewith, a housing for protecting at least axial end surfaces of the stator, bearings for rotatably supporting the rotary shaft, and a bearing mounting member arranged around the rotary shaft for fixing the bearings on the housing, wherein an adjusting member for adjusting a diametrical inclination of the axial width of the space between the bearing mounting member and the housing is interposed between the bearing mounting member and the housing.

The adjusting member interposed between the housing and the bearing mounting member makes it possible to adjust the axial width of the space between the bearing mounting member and the housing to thereby align the center axes of the bearings with the center axis of the housing and therefore arrange the center axes of the bearings in line with the rotation axis of the rotor.

Preferably, the adjusting member includes a plurality of ring-shaped space adjusting plates each having an opening with a sufficient inner diameter to mount at least the bearing mounting member therein, and each of the space adjusting plates has a thickness linearly changing in the direction of the diameter thereof. The adjusting member is constituted by a plurality of ring-shaped space adjusting plates having the thickness linearly changing in the direction of the diameter (the direction perpendicular to the center axis thereof), and therefore, by rotating the space adjusting plates about the center axis relative to each other, the inclination of the axial end surface of the adjusting member with the space adjusting plates superposed one on another can be adjusted.

The diametrical inclination of the thickness of the adjusting member can be adjusted in accordance with the diametrical inclination of the axial width of the space between the bearing mounting member and the housing, so that the center axis of the bearing mounting member can be aligned with the center axis of the housing. Preferably, the adjusting member is adapted so that the diametrical inclination of the thickness thereof can be adjusted by superposing the plurality of space adjusting plates one on another and rotating the plurality of space adjusting plates relative to each other about the center axis thereof.

Preferably, each of the space adjusting plates has at least one index on the outer periphery thereof, and is adjusted in angular position about the center axis thereof with reference to the index.

A plurality of indexes may be notched at predetermined pitches on the outer periphery of the space adjusting plates.

Also, each of the plurality of space adjusting plates may be formed with holes at predetermined pitches on the outer periphery thereof, so that the plurality of space adjusting plates superposed one on another can be fixed between the bearing mounting member and the housing by inserting screws into the holes.

The shape of the outer periphery and the opening of each space adjusting plate can be selected from a group including a circle and polygons having at least four sides.

According to the present invention, in the electric motor not using a jacket, the rotation axis of the rotor can be aligned with the center axes of the bearings without using integral machining.

### BRIEF DESCRIPTION OF THE DRAWINGS

The above and other objects, features and advantages of the present invention will be described in more detail below based on the preferred embodiments of the present invention with reference to the accompanying drawings, wherein:
Fig. 1 is an exploded sectional view showing a general configuration of an electric motor according to the present invention;
Fig. 2 is a sectional view showing the assembled electric motor according to the present invention;
Figs. 3A and 3B are a sectional view and a plan view, respectively, of a ring-shaped space adjusting plate constituting an adjusting member;
Figs. 4A to 4D are diagrams for illustrating a method of adjusting the diametrical inclination of the thickness of the adjusting member using the space adjusting plates shown in Figs 3A and 3B;
Fig. 5 is a table showing an example of correspondence between the shift angle θ of the space adjusting plate and the diametrical inclination of the thickness of the adjusting member when the diametrical inclination of the thickness of the adjusting member using the space adjusting plates shown in Figs. 3A and 3B is adjusted;
Figs. 6A and 6B are a side view and a plan view, respectively, showing another example of the space adjusting plate;
Figs. 7A to 7F are diagrams for illustrating a method of adjusting the diametrical inclination of the thickness of the adjusting member using the space adjusting plates shown in Figs 6A and 6B;
Fig. 8 is a table showing an example of correspondence between the shift angle θ of the space adjusting plate and the diametrical inclination of the thickness of the adjusting member when the diametrical inclination of the thickness of the adjusting member using the space adjusting plates shown in Figs. 6A and 6B is adjusted;
Figs. 9A to 9F are diagrams showing various examples of the shape of the space adjusting plate according to the present invention;
Figs. 10A to 10C are diagrams for illustrating examples of the configuration in which a plurality of sets of two space adjusting plates are combined;
Fig. 11 is a sectional view showing a general configuration of a typical electric motor;
Fig. 12 is an exploded sectional view showing an example of a configuration of an electric motor assembled without using a jacket;
Fig. 13 is a sectional view showing the assembled electric motor of Fig. 12;
Fig. 14 is a sectional view for illustrating the integral machining process;
Fig. 15 is a sectional view of the electric motor having an inclined axial end surface of the stator;
Fig. 16 is a sectional view of the electric motor having an inclined axial end surface of the stator;
Fig. 17 is a sectional view of the electric motor to which the integral machining is not applied; and
Fig. 18 is a sectional view of the electric motor to which the integral machining is not applied.

### DETAILED DESCRIPTION

Embodiments of the present invention will be described below with reference to the drawings.

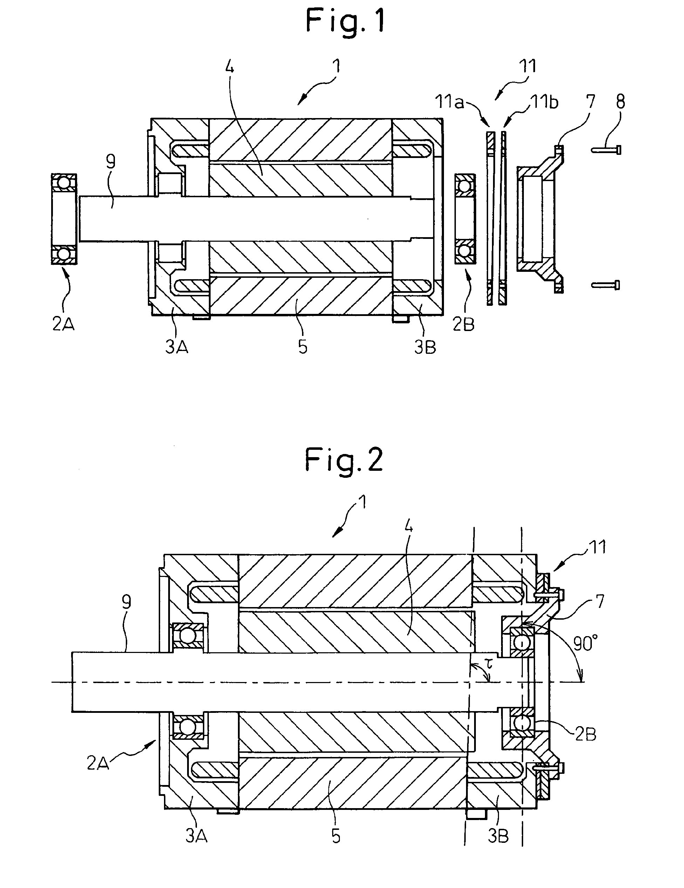

Figs. 1 and 2 are sectional views showing a general configuration of an electric motor according to the present invention. Fig. 1 shows the state before the component parts of the electric motor are assembled and Fig. 2 shows the state after the component parts of the electric motor are assembled.

In Fig. 1, the electric motor 1 includes a rotor 4 having a rotary shaft 9, a stator 5 annularly surrounding the outer periphery of the rotor 4 in spaced relation therewith, a housing 3 for protecting at least axial end surfaces of the stator 5, bearings 2 for rotatably supporting the rotary shaft 9, and a bearing mounting member 7 arranged around the rotary shaft 9 for fixing the bearings to the housing. Further, the electric motor 1 includes an adjusting member 11 arranged between the bearing mounting member 7 and a housing 3B for adjusting the diametrical inclination of the axial width of the space between the bearing mounting member 7 and the housing 3B.

The housing 3 includes a front housing 3A for protecting the front end surface of the stator 5 facing the front side thereof in the direction of the center axis thereof and a rear housing 3B for protecting the rear end surface of the stator 5 facing the rear side thereof in the direction of the center axis thereof. Also, the bearing 2 includes a front bearing 2A for rotatably supporting the front portion of the rotary shaft 9 and a rear bearing 2B for rotatably supporting the rear portion of the rotary shaft 9.

The front bearing 2A is fixed on an inner peripheral surface of an opening formed in the front housing 3A, while the rear bearing 2B is mounted on an inner peripheral surface of an opening formed in the bearing mounting member 7 and fixed on the rear housing 3B through the bearing mounting member 7. The bearing mounting member 7 is fixed on the rear housing 3B by screws 8.

In mounting the bearing mounting member 7 on the rear housing 3B, the adjusting member 11 is interposed between the bearing mounting member 7 and the rear housing 3B to thereby adjust the diametrical inclination of the axial width of the space between the bearing mounting member 7 and the housing 3.

The adjusting member 11 includes a plurality of ring-shaped space adjusting plates 11a, 11b, and each of the space adjusting plates has an opening with an inner diameter sufficient to mount at least the bearing mounting member 7 therein. Also, each of the space adjusting plates 11a, 11b has a wedge-like longitudinal sectional shape such as a diagonally cut cylindrical body and the thickness thereof linearly changes in the diametrical direction (in a direction perpendicular to the center axis thereof).

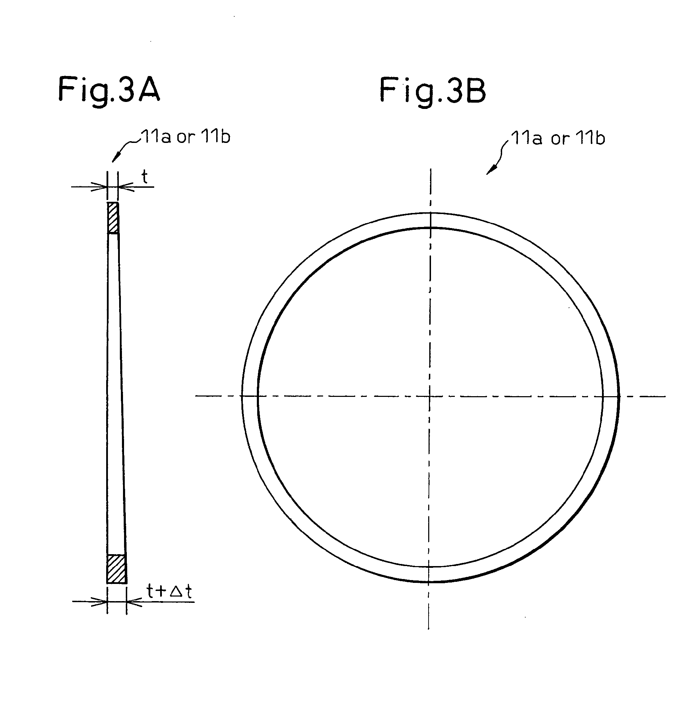

Figs. 3A, 3B show one ring-shaped space adjusting plate 11a or 11b constituting the adjusting member 11. The inner diameter of the opening of the ring-shaped space adjusting plate 11a or 11b is sufficiently large to mount the bearing mounting member 7 therein and is substantially as large as, or larger than, the outer diameter of the bearing mounting member 7.

The thickness of the space adjusting plate 11a or 11b is uneven so that the thickness of one end portion thereof is t and the thickness of the other end portion thereof is t + Δt, and the thickness linearly changes progressively in the diametrical direction from one end portion toward the other end portion thereof. The values of "t" and "Δt" are determined in accordance with the type of the electric motor, the machining accuracy and the mounting accuracy of the stator, the housing and the bearing mounting member.

A first member having an inclined axial end surface is mounted on a second member by interposing the space adjusting plates between the first member and the second member. In this way, the first member can be mounted on the second member without inclining the second member. For example, by mounting the bearing mounting member on the housing having an inclined axial end surface with the space adjusting plates interposed between the housing and the bearing mounting member, the inclination of the axial end surface of the housing can be corrected to thereby prevent the inclination of the bearing mounting member which might otherwise occur due to the inclination of the axial end surface of the housing.

The use of the adjusting member 11 including a plurality of space adjusting plates 11a or 11b superposed one on another according to the invention makes possible a correction in accordance with the degree of inclination of the axial end surface of the housing.

In the space adjusting plates 11a or 11b, one of the axial end surfaces thereof is inclined and the thickness thereof is progressively varied in diametrical direction. Therefore, by holding the space adjusting plates between two members and changing the relative angular position thereof about the axis thereof, the interval or space between the two members can be changed in the peripheral direction. By thus changing the interval between the two members in peripheral direction, the relative inclinations of the two members can be changed.

In the case where the axial end surfaces of the stator 5 of the electric motor are inclined, the housing 3 mounted on the stator 5 is also inclined. The degree of the inclination of the housing varies from one electric motor to another. In view of this, the adjusting member 11 is held between the housing 3 and the bearing mounting member 7, and the plurality of space adjusting plates 11a and 11b constituting the adjusting member are rotated relative to each other about the center axis thereof to so that the relative angular position of the space adjusting plates are changed to thereby correct the inclination of the bearing 2 mounted on the bearing mounting member.

In this way, the correction can be made in accordance with the degrees of the inclinations of the stator and the housing simply by rotating the space adjusting plates relative to each other.

In Figs. 1 and 2, the rear bearing 2B is firstly mounted on the rear housing 3B through the bearing mounting member 7 without using the adjusting member 11, and the rotor 4 is rotated. If the center axis of the front bearing 2A is not aligned with the center axis of the rear bearing 2B, the center axis of the rotary shaft 9 wobbles with the rotation, and the degree of this wobble is determined.

Next, the diametrical inclination of the thickness of the adjusting member 11 is adjusted in accordance with the degree of wobble thus determined. The diametrical inclination of the thickness is adjusted by rotating the plurality of space adjusting plates 11a, 11b constituting the adjusting member 11 relative to each other about the center axis thereof and thereby changing the relative angular position of the plurality of space adjusting plates. The thickness of the space adjusting plates 11a, 11b is linearly varied in the diametrical direction and, therefore, the relative rotation of the plurality of space adjusting plates 11a and 11b changes the thickness difference between the two opposite ends of the superposed space adjusting plates. The inclination can be corrected by the difference in thickness of the adjusting member 11.

The relation between the degree of wobble and the plate end thickness difference required for correction of the wobble, the relation between the thickness difference and the superposed relation of the plurality of space adjusting plates 11a and 11b (mutual relation of angular position) or the relation between the degree of wobble and the superposition of the space adjusting plates 11a, 11b (mutual relation of angular position) are predetermined, and from the determined degree of the wobble, the relative angular position of the space adjusting plates 11a and 11b are determined. Thus, the angle by which the space adjusting plates 11a and 11b are rotated about the center axis thereof is set.

Next, the adjusting member 11 having the space adjusting plates adjusted in angular position is mounted on the rear housing 3B. As a result, the inclination of the mounting surface (actually, the axial end surface of the adjusting member 11) for mounting the bearing mounting member 7 thereon is corrected. The bearing mounting member 7 is mounted on the adjusting member 11 having the inclination thereof adjusted, so that the center axis of the rear bearing 2B is arranged in line with the center axis of the front bearing 2A.

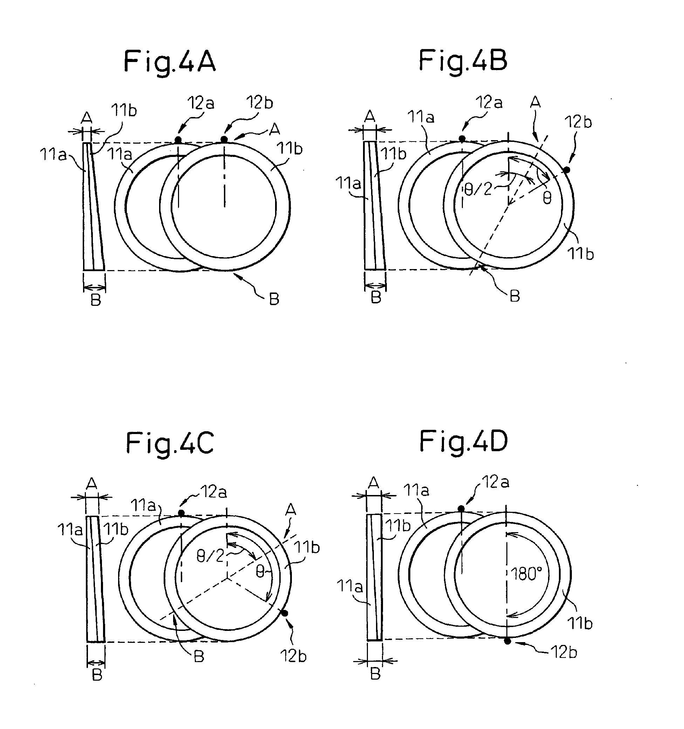

Figs. 4A to 4D are diagrams for illustrating a method of adjusting the diametrical inclination of the thickness of the adjusting member using the space adjusting plates shown in Figs. 3A and 3B. The thickness difference between the diametrical end portions of the adjusting member 11 can be changed by changing the angle of superposition of the space adjusting plates 11a, 11b. Figs. 4A to 4D show an example in which the thickness difference is changed by changing the angular positions of the space adjusting plates 11a and 11b. In each of Figs. 4A to 4D, a side view of the superposed space adjusting plates is shown on the left side, and a plan view of the space adjusting plates superposed with the front space adjusting plate and the rear space adjusting plate shifted from each other is shown on the right side. To simplify the illustration, the superposed portion of the rear space adjusting plate is not shown.

In Figs. 4A to 4D, the marks 12a and 12b shown by black circles indicate specified positions on the space adjusting plates 11a and 11b. Referring to the marks as an index, the angular positions of the space adjusting plates 11a and 11b about the center axis can be changed. In the shown case, the marks 12a and 12b are provided on the thinnest portions of the space adjusting plates.

Fig. 4A shows the state in which the angular positions of the two space adjusting plates are not shifted from each other. In this case, the thinnest portions of the space adjusting plates are superposed one on the other and so are the thickest portions of the space adjusting plates. As a result, the thickness A of the thinnest portion of the space adjusting member is 2t, and the thickness B of the thickest portion of the thickness adjusting member is 2t + 2Δt. Thus, the maximum thickness difference (B - A) of the adjusting member is given as 2Δt.

Figs. 4B and 4C show the state in which the two space adjusting plates are shifted by the angle θ from each other about the center axis thereof, i.e. the state in which they are rotated by the angle θ relative to each other. In this case, for example, the two space adjusting plates 11a and 11b are superposed one on the other with the mark 12b rotated by the angle θ about the center axis thereof with respect to the mark 12a. As a result, the thinnest portion of the adjusting member is located at an angular position of θ/2 from the mark 12a about the center axis thereof, and the thickness A thereof is given as 2t + Δt (1 - cos (θ/2)) . On the other hand, the thickest portion of the adjusting member is located at the angular position of θ/2 + 180° from the mark 12a and the thickness B is given as 2t + Δt (1 + cos (θ/2)) . Thus, the maximum thickness difference (B - A) of the adjusting member is given as 2Δtcos (θ/2) .

Fig. 4D shows the state in which the two space adjusting plates are rotated by the angle of 180° about the center axis thereof from each other. In this case, the two space adjusting plates are superposed one on the other, for example, with the mark 12b rotated by the angle of 180° with respect to the mark 12a. As a result, the thickness difference of the adjusting member is zero, i.e. the adjusting member has a uniform thickness.

The marks 12a and 12b providing indexes for the shifting movement (i.e. the rotation) of the space adjusting plates are provided by notching the space adjusting plates or printing the marks on the space adjusting plates. Using the marks 12a and 12 of the space adjusting plates 11a, 11b thus provided as a reference, the space adjusting plates 11a, 11b can be set in the angular positions described above.

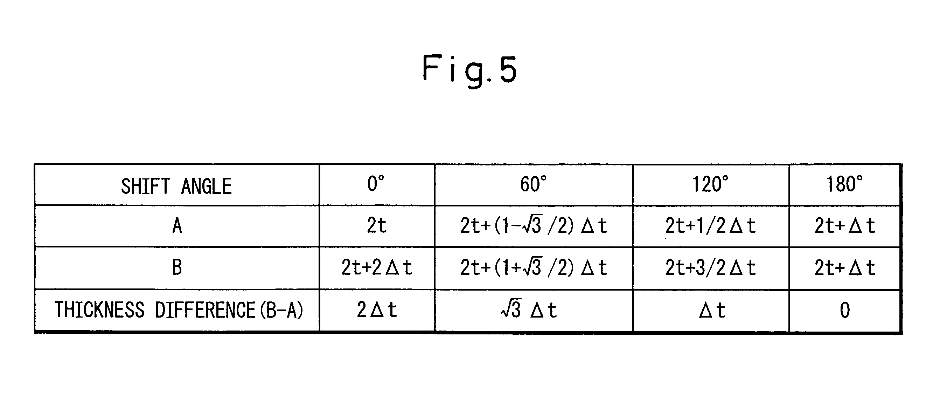

Fig. 5 shows an example of correspondence between the shift angle (rotation angle) θ of the space adjusting plates and the diametrical inclination of the thickness of the adjusting member when the diametrical inclination of the thickness of the adjusting member is adjusted.

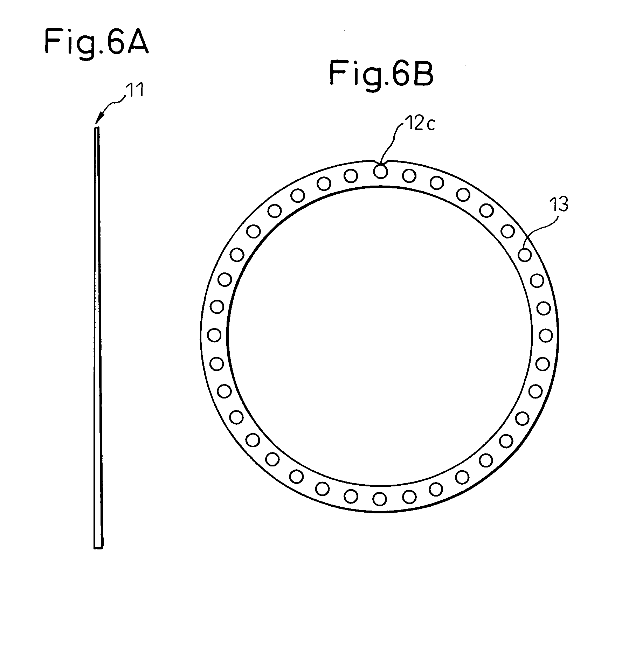

Figs. 6A and 6B are a side view and a plan view, respectively, showing another example of the space adjusting plate. In the example shown in Figs. 6A and 6B, a notch 12 is formed in a part of the adjusting member 11, and threaded holes 13 are formed at predetermined pitches in the peripheral direction of the adjusting member 11. The notch 12c, like the marks described above, can be used as indexes. Also, the threaded holes 13 can be used to mount the adjusting member on the housing.

The size of the ring-shaped space adjusting plate may be, for example, such that when the outer diameter is about 380 mm and the inner diameter is about 320 mm, the thinnest portion is 1 mm and the thickness portion is 1.3 mm. The thickest portion can range from 1.1 mm to 1.5 mm. It should be noted that these values are only examples, and the size of the space adjusting plate according to the present invention is not limited to them.

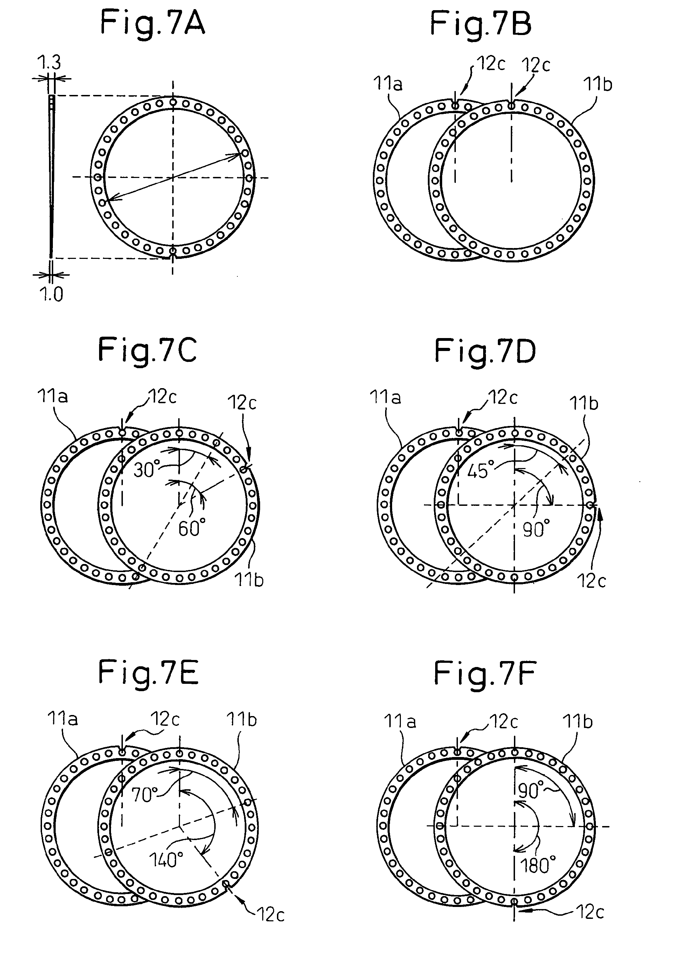

Figs. 7A to 7F are diagrams for illustrating a method of adjusting the diametrical inclination of the thickness of the adjusting member using the space adjusting plates shown in Figs. 6A and 6B. Also, in the embodiment shown in Figs. 7B to 7F, like the embodiment shown in Figs. 4A to 4D, the thickness difference of the adjusting member 11 can be changed by changing the angular positions of the space adjusting plates 11a and 11b superposed one on the other. In Fig. 7A, a side view of the ring-shaped adjusting plate is shown on the left side and a plan view thereof is shown on the right side. Figs. 7B to 7F show plan views of the space adjusting plates set in various angular positions and superposed one on another with the front space adjusting plate and the rear space adjusting plate shifted from each other. To simplify the illustration, the superposed portion of the rear space adjusting plate is not shown.

The notches 12c of the space adjusting plates 11a and 11b shown in Figs. 7A to 7F are used as indexes indicating specified positions on the space adjusting plates 11a and 11b. Referring to the notches 12c as an index, the angular positions of the space adjusting plates 11a and 11b can be changed. According to the embodiment shown in Figs. 7A to 7F, the notches 12c are provided in the thinnest portion of the space adjusting plate.

Fig. 7B shows the state in which the angular positions of the two space adjusting plates are not shifted from each other. In this case, the space adjusting plates are set in the same angular position by superposing their notches one on the other. As a result, the thinnest portion of the adjusting member has a thickness of 2.0 mm, and the thickest portion of the adjusting member has a thickness of 2.6 mm. Thus, the maximum thickness difference of the adjusting member is 0.6 mm.

Fig. 7C shows the state in which the shift angle of the two space adjusting plates about the center axis thereof is set to 60°, i.e. the state in which the two space adjusting plates are rotated from each other by the angle of 60° about the center axis thereof. In this case, for example, the two space adjusting plates 11a and 11b are superposed one on the other with the notches 12c rotated by the angle of 60° from each other. As a result, the thinnest portion of the adjusting member is located at an angular position of 30° about the center axis thereof with respect to one of the notches 12c and has a thickness of 2.04 mm. On the other hand, the thickest portion of the adjusting member is located at an angular position of 210° about the center axis thereof with respect to the same one of the notches 12c and has a thickness of 2.56 mm. Thus, the maximum thickness difference of the adjusting member is 0.5 mm.

Fig. 7D shows the state in which the shift angle of the two space adjusting plates about the center axis thereof is set to 90°, i.e. the state in which the two space adjusting plates are rotated from each other by the angle of 90° about the center axis thereof. In this case, for example, the two space adjusting plates 11a and 11b are superposed one on the other with the notches 12c rotated by the angle of 90° from each other. As a result, the thinnest portion of the adjusting member is located at an angular position of 45° about the center axis thereof with respect to one of the notches 12c and has a thickness of 2.1 mm. On the other hand, the thickest portion of the adjusting member is located at an angular position of 225° about the center axis thereof with respect to the same one of the notches 12c and has a thickness of 2.5 mm. Thus, the maximum thickness difference of the adjusting member is 0.4 mm.

Fig. 7E shows the state in which the shift angle of the two space adjusting plates about the center axis thereof is set to 140°, i.e. the state in which the two space adjusting plates are rotated from each other by the angle of 140° about the center axis thereof. In this case, for example, the two space adjusting plates 11a and 11b are superposed one on the other with the notches 12c rotated by the angle of 140° from each other. As a result, the thinnest portion of the adjusting member is located at an angular position of 70° about the center axis thereof with respect to one of the notches 12c and has a thickness of 2.2 mm. On the other hand, the thickest portion of the adjusting member is located at an angular position of 250° about the center axis thereof with respect to the same one of the notches 12c and has a thickness of 2.4 mm. Thus, the maximum thickness difference of the adjusting member is 0.2 mm.

Fig. 7F shows the state in which the shift angle of the two space adjusting plates about the center axis thereof is set to 180°, i.e. the state in which the two space adjusting plates are rotated from each other by 180° about the center axis thereof. In this case, the two space adjusting plates 11a and 11b are superposed one on the other with the notches 12c rotated from each other by the angle of 180° about the center axis thereof. As a result, the adjusting member has no thickness difference, and therefore has a uniform thickness.

As in the above-mentioned example, the notches 12c can be used as an index for an angular position when rotating the space adjusting plates.

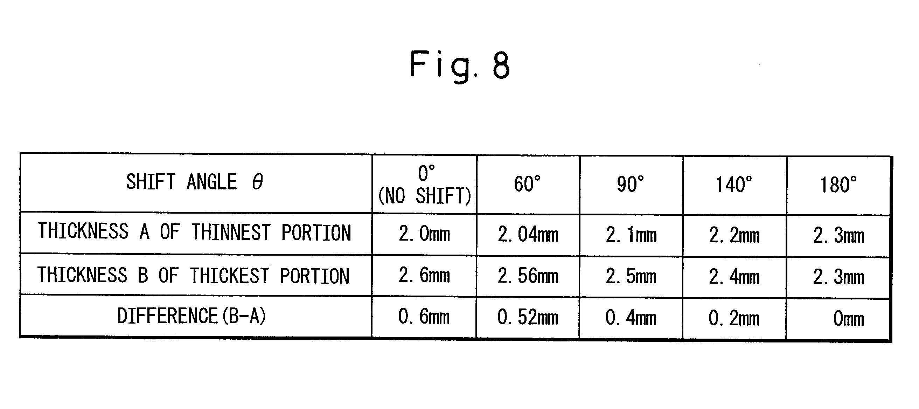

Fig. 8 shows an example of a relation between the shift angle (rotation angle) θ of the space adjusting plates and the diametrical inclination of the thickness of the adjusting member when the diametrical inclination of the thickness of the adjusting member using the space adjusting plates is adjusted.

The shapes of the outer periphery and the opening of the space adjusting plates according to the present invention may have a shape such as a circle, a polygon having at least four sides and a combination thereof.

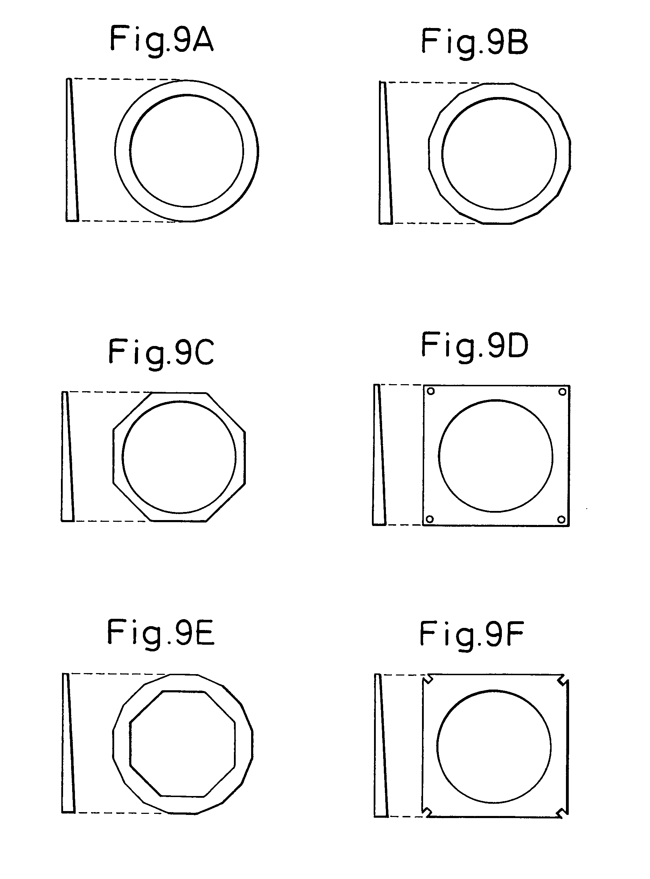

Figs. 9A to 9F show examples of various shapes of the space adjusting plate. In Fig. 9A, both the outer periphery and the opening of the space adjusting plate are circular. In Figs 9B to 9F, the shape of the outer periphery and the opening of the space adjusting plate is a combination of a circle and a polygon. Fig. 9B shows an example in which the outer periphery of the space adjusting plate is polygonal and the opening of the space adjusting plate is circular. Fig. 9C shows an example in which the outer periphery is octagonal and the opening is circular. Fig. 9D shows an example in which the outer periphery is rectangular and the opening is circular. Fig. 9E shows an example in which the outer periphery and the opening are both polygonal. Fig. 9F shows an example in which the outer periphery is rectangular and the opening is circular with each corner of the rectangle notched. In Figs. 9C and 9D, a threaded hole is formed at each corner.

The space adjusting plates according to the present invention are not limited to the configuration shown in Figs. 4A to 4D and 7A to 7F, in which a set of the two space adjusting plates are superposed one on the other to adjust the diametrical inclination of the thickness, but can also employ a configuration in which a plurality of sets of space adjusting plates are superposed one on another to adjust the diametrical inclination of the thickness thereof.

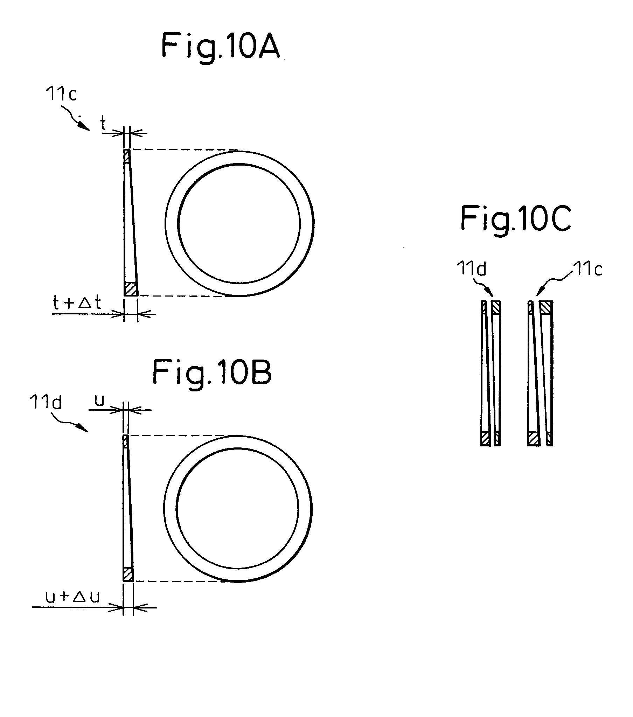

Figs. 10A to 10C are diagrams for illustrating an example of the configuration in which a plurality of sets of two space adjusting plates are superposed one on another. Fig. 10C shows an example in which two sets of space adjusting plates, including one set of two space adjusting plate 11c (Fig. 10A), each having one end of the thickness "t" and the other end of the thickness "t + Δt", and the other set of two space adjusting plates 11d (Fig. 10B), each having one end of the thickness "u" and the other end of the thickness "u + Δu", are superposed one on the other.

By employing different ranges of thickness change of the space adjusting plate of each set, the range of adjustment of the diametrical inclination of the thickness can be changed. For example, by setting the relation between Δu and Δt as Δu < Δt, the space adjusting plate 11c can be used for coarse adjustment over a wide range, while the space adjusting plate 11d can be used for fine adjustment. Therefore, by combining them, both the coarse adjustment and the fine adjustment are made possible.

While the present invention has been described above with reference to the specific embodiments shown in the accompanying drawings, these embodiments are only for explanatory and are not limitative. Therefore, the range of the present invention is only restricted by the claims. The preferred embodiments of the present invention may be modified or changed in any way without departing from the scope of the claims.

## Claims

1. An electric motor comprising a rotor (4) having a rotary shaft, a stator (5) annularly surrounding the outer periphery of said rotor in spaced relation therewith, a housing (3) for protecting at least axial end surfaces of said stator, bearings (2) for rotatably supporting said rotary shaft, and a bearing mounting member (7) arranged around the rotary shaft for fixing said bearings on said housing, said electric motor
**characterized in that**:
an adjusting member (11) for adjusting a diametrical inclination of the axial width of the space between said bearing mounting member and said housing is interposed between said bearing mounting member (7) and said housing (3).

2. The electric motor according to claim 1, wherein the adjusting member (11) includes a plurality of ring-shaped space adjusting plates (11a, 11b) each having an opening of a sufficient inner diameter to mount at least said bearing mounting member (7) therein, and wherein each of said space adjusting plates has a thickness linearly changing in a direction of the diameter thereof.

3. The electric motor according to claim 2, wherein the diametrical inclination of the thickness of said adjusting member (11) can be adjusted by superposing said plurality of space adjusting plates (11a, 11b) one on another and rotating said plurality of space adjusting plates relative to each other about the center axis thereof.

4. The electric motor according to claim 3, wherein each of said space adjusting plates (11a; 11b) has at least one index (12a; 12b; 12c) on the outer periphery thereof, and is adjusted in angular position about the center axis thereof with reference to said index.

5. The electric motor according to claim 4, wherein a plurality of indexes (12a; 12b) are notched at predetermined pitches on the outer periphery of said space adjusting plates (11a; 11b) .

6. The electric motor according to claim 3, wherein each of said plurality of space adjusting plates (11a; 11b) is formed with holes (13) at predetermined pitches on the outer periphery thereof, so that said plurality of space adjusting plates (11a, 11b) superposed one on another can be fixed between said bearing mounting member (7) and said housing (3) by screws inserted in said holes.

7. The electric motor according to any one of claims 2 to 6, wherein the shape of the outer periphery and the opening of each space adjusting plate (11a; 11b) is selected from a group including a circle and polygons having at least four sides.
